# EUROPEAN PATENT SPECIFICATION

(11) **EP 4 257 466 B1**
(45) Date of publication and mention of the grant of the patent: **07.05.2025**
(21) Application number: 23160702.9
(22) Date of filing: 08.03.2023
(51) Int. Cl.: B62J 17/02, B62J 43/30

(54) **STRADDLED VEHICLE**
GRÄTSCHSITZFAHRZEUG
VÉHICULE À SELLE

(30) Priority: 07.04.2022 JP 2022063902
(43) Date of publication of application: 11.10.2023
(73) Proprietor: Yamaha Hatsudoki Kabushiki Kaisha, Iwata-shi, Shizuoka 438-8501 (JP)
(72) Inventor: NURJAMAN, Jajang, 13920 Jakarta (ID); HUTOMO, Yoyok, 13920 Jakarta (ID)
(74) Representative: Studio Torta S.p.A.

(56) References cited:
- JP-A- 2002 234 477
- US-A- 4 522 442
- US-A1- 2017 183 054

## Description

### TECHNICAL FIELD

The present invention relates to a straddled vehicle.

### PRIOR ART

Some straddled vehicles have a battery arranged in a front cover. For example, in a straddled vehicle disclosed in Japanese Patent Application Laid-Open No. 2002-234477, a battery is supported by a battery tray in a front cover. The front cover is divided into a center portion and left and right side portions. An opening is provided between the left and right side portions by removing the center portion from the left and right side portions. The battery is removed from the vehicle by pulling it upward through the opening.

In the straddled vehicle described above, the opening has a shape that widens in the left-right direction toward above. Therefore, by extracting the battery upward from the battery tray, the battery can be easily removed without interfering with the left and right side portions.

On the other hand, some straddled vehicles have an opening that narrows in the left-right direction toward above. In such a vehicle, when the battery is pulled upward as described above, the battery is likely to interfere with the left and right side portions. Therefore, it becomes difficult to remove the battery, and the maintainability is lowered. By widening the opening in the left-right direction, interference with the battery can be suppressed, but the increased opening reduces the rigidity of the front cover. An object of the present invention is to facilitate removal of a battery while suppressing deterioration in rigidity of a front cover in a straddled vehicle.

### DESCRIPTION OF THE INVENTION

A straddled vehicle according to one aspect of the present invention includes a head pipe, a front cover, a battery holder, and a battery. The front cover is arranged in front of the head pipe. The battery holder is arranged between the head pipe and the front cover. The battery is held in the battery holder. The front cover includes a center cover, a left side cover, and a right side cover. The center cover overlaps the battery as seen in a vehicle front view. The left side cover is arranged leftward of the center cover. The right side cover is arranged rightward of the center cover. An opening is provided between the left side cover and the right side cover in a state that the center cover is removed from the front cover. The opening has a shape expanding in the left-right direction toward below as seen in the vehicle front view. The battery holder supports the battery so that the battery is removable through the opening by rotating the battery around a lower end of the battery and then moving it forward.

In the straddled vehicle according to the present aspect, the opening becomes smaller in the left-right direction toward above. Therefore, when the battery is extracted upward, the battery tends to interfere with the left and right side covers. On the other hand, the opening becomes larger in the left-right direction toward below. Therefore, by rotating the battery around the lower end and lowering the position of the upper portion of the battery, the battery can be pulled out through the wide portion of the opening. As a result, the battery can be easily removed from the vehicle without interference with the left and right side covers without enlarging the opening. Therefore, in the straddled vehicle according to the present aspect, it is possible to easily remove the battery while suppressing deterioration of the rigidity of the front cover.

In a state that the battery is held in the battery holder, a dimension of the battery in a vertical direction may be larger than a dimension of the battery in a front-rear direction. In this case, since the opening becomes narrower in the left-right direction toward above, the upper portion of the battery tends to interfere with the left and right side covers because the battery is large in the vertical direction. However, by rotating the battery and then extracting it forward, the battery can be removed without interfering with the left and right side covers.

In a state that the battery is held in the battery holder, a dimension of the battery in the left-right direction may be larger than the dimension of the battery in the vertical direction. In this case, since the battery is large in the left-right direction, the battery tends to interfere with the left and right side covers. However, by rotating the battery and pulling it forward, the battery can be removed without interfering with the left and right side covers.

The opening may have a shape that is smaller than the battery in the left-right direction above the battery. In this case, when the battery is extracted upward, the battery interferes with the left and right side covers. However, in the straddled vehicle according to the present aspect, the battery can be easily removed without interfering with the left and right side covers by rotating the battery and then moving it forward.

A top of the battery may include an upper left corner and an upper right corner. The upper left corner may overlap the left side cover as seen in the vehicle front view. The upper right corner may overlap the right side cover as seen in the vehicle front view. In this case, if the battery is to be pulled forward as it is, the upper left corner and the upper right corner interfere with the left and right side covers. However, in the straddled vehicle according to the present aspect, the battery can be easily removed without interfering with the left and right side covers by rotating the battery and then moving it forward.

The battery holder may have a shape that opens forward. In this case, it is easy to rotate the battery and extract it forward.

The straddled vehicle may further includes a fastener. The fastener may be removably attached to the battery holder. The fastener may retain the battery in the battery holder. In this case, the fastener prevents the battery from slipping out of the battery holder. Also, the battery is released from the battery holder by removing the fastener from the battery holder. Thereby, the battery can be easily rotated.

The battery holder may have a shape that opens forward and upward. The fastener may include a front plate portion and an upper plate portion. The front plate portion may be positioned in front of the battery. The upper plate portion may be positioned above the battery. In this case, access to the battery from the front and from above is easy. Also, the fastener prevents the battery from slipping forward and upward from the battery holder.

The battery holder may include a support surface that supports the battery from below. The support surface may be inclined forward and upward. In this case, the battery is supported by the support surface even when the fastener is removed and the battery is released from the battery holder. In addition, since the support surface is inclined forward and upward, the battery is less likely to drop out of the battery holder.

The battery may include a front surface. The front surface may face forward while being held by the battery holder. The battery may be arranged to protrude forward from the opening with the battery rotated so that the front surface of the battery contacts the support surface of the battery holder. In this case, the battery can be easily extracted through the opening from the rotated state.

The center cover may include an upper cover portion and a lower cover portion. The lower cover portion may be arranged below the upper cover portion. The lower cover portion may be provided separately from the upper cover portion. The lower cover portion may be detachable with respect to the left side cover, the right side cover, and the upper cover portion. In this case, the opening becomes larger in the left-right direction toward below. Therefore, by removing the lower cover portion, a large portion in the left-right direction of the opening are opened. This facilitates access to the inside of the front cover and improves maintainability.

The lower cover portion may be attached to the left side cover, the right side cover, and the upper cover portion by fitting. In this case, attachment and detachment of the lower cover portion is easy. This improves maintainability.

### BRIEF DESCRIPTION OF THE DRAWINGS

FIG. 1 is a side view of a straddled vehicle according to an embodiment.
FIG. 2 is an enlarged side view of the straddled vehicle.
FIG. 3 is an enlarged front view of the straddled vehicle.
FIG. 4 is an enlarged front view of the straddled vehicle with a center cover removed.
FIG. 5 is an enlarged perspective view of the straddled vehicle with the center cover removed.
FIG. 6 is a perspective view of a battery holder and a battery.
FIG. 7 is a perspective view of the battery holder.
FIG. 8 is a perspective view showing the battery holder and the battery with a fastener removed from the battery holder.
FIG. 9 is an enlarged front view of the straddled vehicle with a lower cover portion removed.
FIG. 10 is a perspective view of the lower cover portion.
FIG. 11 is an enlarged front view of the straddled vehicle with the fastener removed from the battery holder.
FIG. 12 is an enlarged perspective view of the straddled vehicle when the battery is removed.

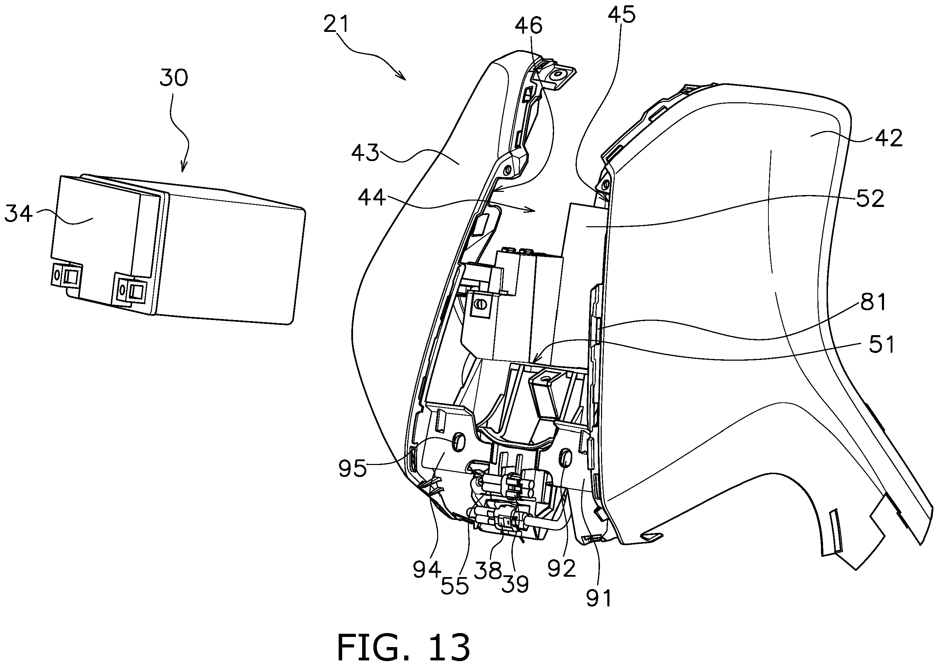

FIG. 13 is an enlarged perspective view of the straddled vehicle when the battery is removed.
FIG. 14 is an enlarged front view of the straddled vehicle showing a modified arrangement of the battery.

### EMBODIMENTS OF THE INVENTION

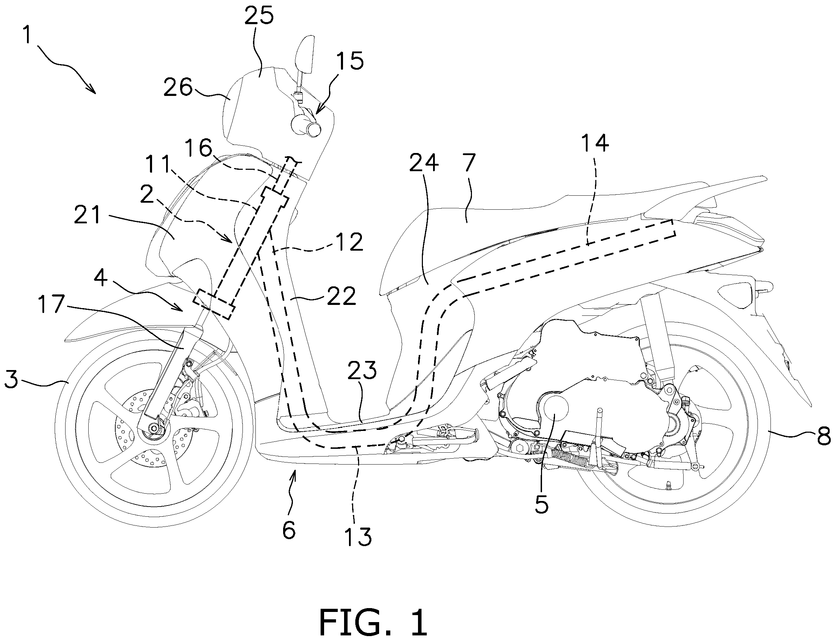

A straddled vehicle according to an embodiment will be described below with reference to the drawings. FIG. 1 is a side view of a straddled vehicle 1 according to the embodiment. The straddled vehicle 1 is a scooter. As shown in FIG. 1, the straddled vehicle 1 includes a body frame 2, a front wheel 3, a steering device 4, a power unit 5, a body cover 6, a seat 7, and a rear wheel 8. In the following description, front/rear, left/right, and up/down directions refer to front/rear, left/right, and up/down directions as seen from a rider on the seat 7.

The body frame 2 includes a head pipe 11, a down frame 12, a lower frame 13, and a seat frame 14. The head pipe 11 extends obliquely forward and downward. The down frame 12 extends downward from the head pipe 11. The lower frame 13 extends rearward from the down frame 12. The seat frame 14 is arranged below the seat 7. The seat frame 14 extends obliquely rearward and upward. The seat 7 is arranged behind the head pipe 11.

The front wheel 3 is rotatably supported by the steering device 4. The steering device 4 is rotatably supported by the head pipe 11. The steering device 4 includes a handle bar 15, a steering shaft 16, and a front fork 17. The handle bar 15 is connected to the steering shaft 16. The steering shaft 16 is rotatably supported by the head pipe 11. The front fork 17 is connected to the steering shaft 16. The front fork 17 rotatably supports the front wheel 3.

The body cover 6 includes a front cover 21, a leg shield 22, a footboard 23, a rear cover 24, and a handle cover 25. The front cover 21 covers the head pipe 11. The front cover 21 is arranged in front of the head pipe 11. The leg shield 22 is arranged behind the front cover 21.

The footboard 23 is arranged in front of and below the seat 7. The footboard 23 has a flat shape. The footboard 23 may have a center tunnel portion projecting upward at the center in the left-right direction. The rear cover 24 is arranged below the seat 7. The handle cover 25 covers the handle bar 15. A headlight 26 is attached to the handle cover 25.

The power unit 5 is arranged below the seat 7. The power unit 5 is supported by the vehicle body frame 2. The power unit 5 includes, for example, an engine and a transmission. The power unit 5 may include an electric motor. The rear wheel 8 is supported by the vehicle body frame 2 via the power unit 5. Alternatively, the rear wheel 8 may be supported by the vehicle body frame 2 via a swing arm. The rear wheel 8 is rotated by power from the power unit 5.

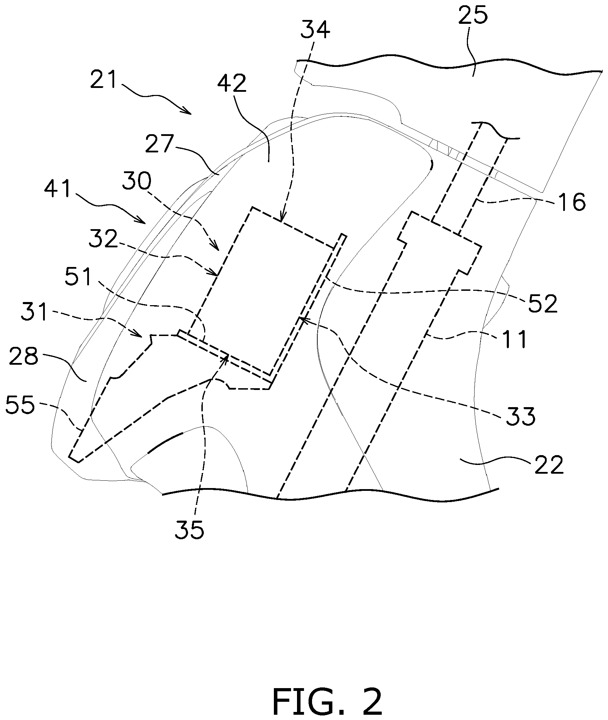

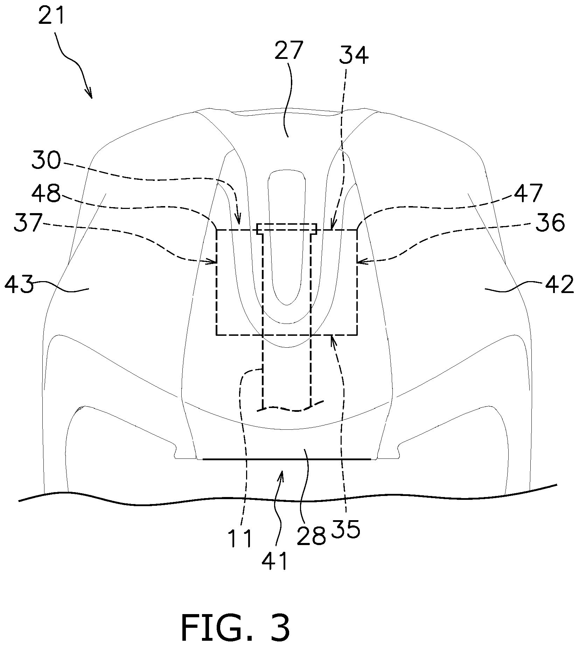

FIG. 2 is an enlarged side view of the straddled vehicle 1. As shown in FIG. 2, the straddled vehicle 1 includes a battery 30 and a battery holder 31. The battery holder 31 is arranged between the head pipe 11 and the front cover 21. The battery 30 is held in the battery holder 31. The battery 30 is arranged in front of the head pipe 11. FIG. 3 is an enlarged front view of the straddled vehicle 1. As shown in FIG. 3, the battery 30 overlaps the head pipe 11 as seen in the vehicle front view.

As shown in FIG. 2, in a state that the battery 30 is held by the battery holder 31, the dimension of the battery 30 in the vertical direction is larger than the dimension of the battery 30 in the front-rear direction. As shown in FIG. 3, in a state that the battery 30 is held by the battery holder 31, the dimension of the battery 30 in the left-right direction is larger than the dimension of the battery 30 in the vertical direction.

The battery 30 is arranged tilted backward. As shown in FIGS. 2 and 3, the battery 30 includes a front surface 32, a rear surface 33, a top surface 34, a bottom surface 35, a first side surface 36, and a second side surface 37. With the battery 30 held by the battery holder 31, the front surface 32 and the rear surface 33 are inclined upward and rearward. With the battery 30 held by the battery holder 31, the upper surface 34 and the lower surface 35 are inclined forward and upward.

As shown in FIG. 3, the front cover 21 includes a center cover 41, a left side cover 42, and a right side cover 43. The center cover 41 overlaps the battery 30 as seen in the vehicle front view. The left side cover 42 is arranged leftward of the center cover 41. The right side cover 43 is arranged rightward of the center cover 41. The center cover 41 is arranged between the left side cover 42 and the right side cover 43 in the left-right direction. The center cover 41 is detachably attached to the left side cover 42 and the right side cover 43.

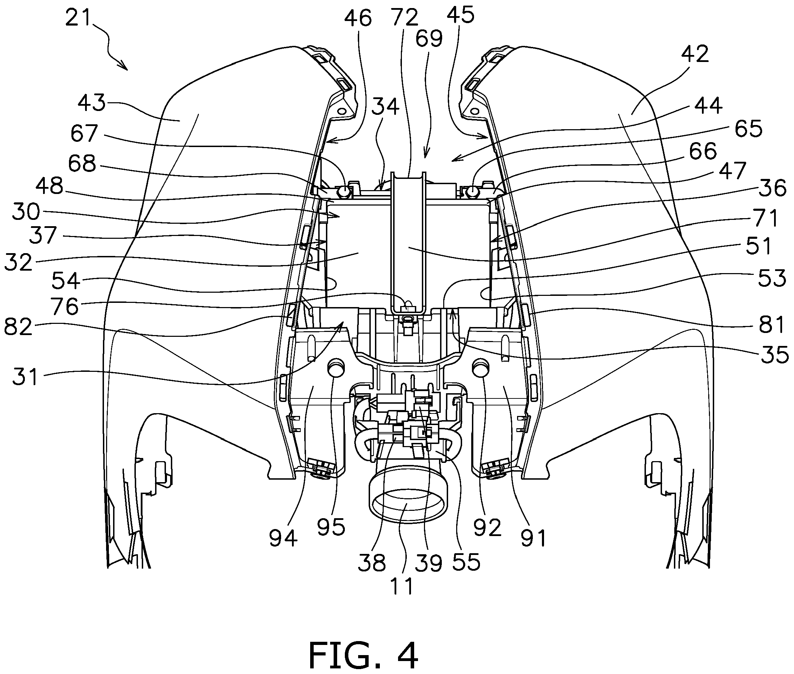

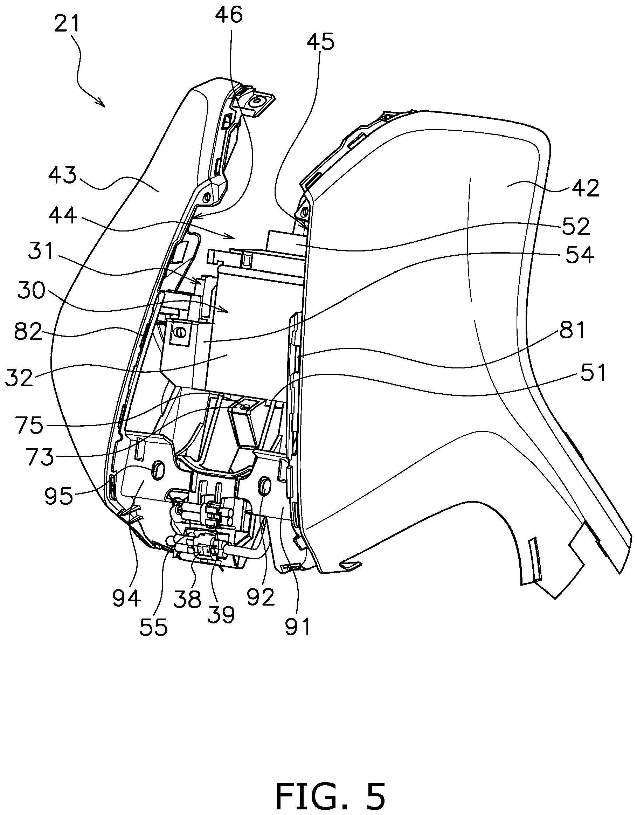

FIG. 4 is an enlarged front view of the straddled vehicle 1 with the center cover 41 removed. FIG. 5 is an enlarged perspective view of the straddled vehicle 1 with the center cover 41 removed. As shown in FIGS. 4 and 5, an opening 44 is provided between the left side cover 42 and the right side cover 43 in a state that the center cover 41 is removed from the front cover 21. The left side cover 42 includes a first inner edge portion 45. The right side cover 43 includes a second inner edge portion 46. The opening 44 is provided between the first inner edge portion 45 and the second inner edge portion 46.

As seen in the vehicle front view, the first inner edge portion 45 is downwardly inclined outward in the left-right direction. As seen in the vehicle front view, the second inner edge portion 46 is downwardly inclined outward in the left-right direction. The opening 44 has a shape expanding in the left-right direction toward below as seen in the vehicle front view. That is, the opening 44 has a shape that narrows in the left-right direction toward above as seen in the vehicle front view. The opening 44 is smaller than the battery 30 in the left-right direction above the upper surface 34 of the battery 30. The opening 44 is larger than the battery 30 in the left-right direction below the upper surface 34 of the battery 30.

The battery 30 is arranged in the opening 44 as seen in the vehicle front view. The top of battery 30 includes an upper left corner portion 47 and an upper right corner portion 48. As seen in the vehicle front view, the upper left corner portion 47 is arranged close to the left side cover 42. As seen in the vehicle front view, the upper right corner portion 48 is arranged close to the right side cover 43. The upper left corner portion 47 is arranged close to the first inner edge portion 45 as seen in the vehicle front view. The upper right corner portion 48 is arranged close to the second inner edge portion 46 as seen in the vehicle front view.

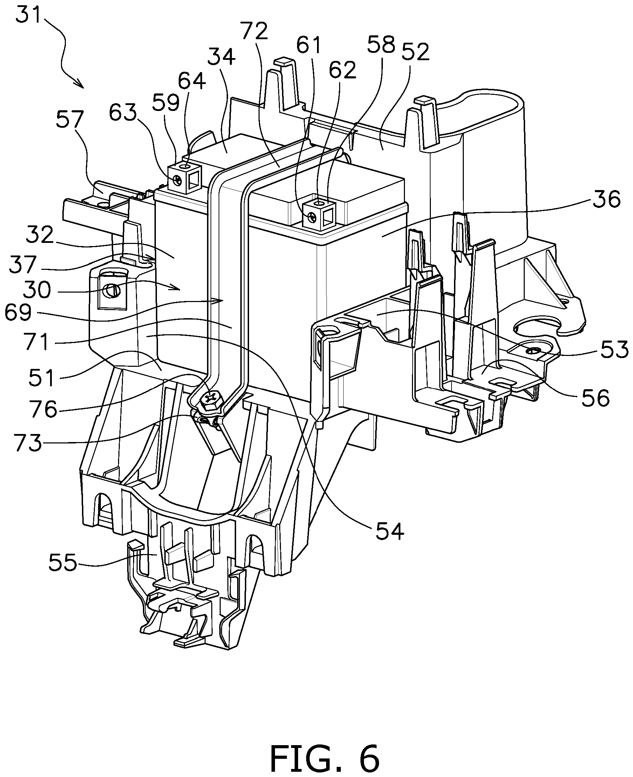

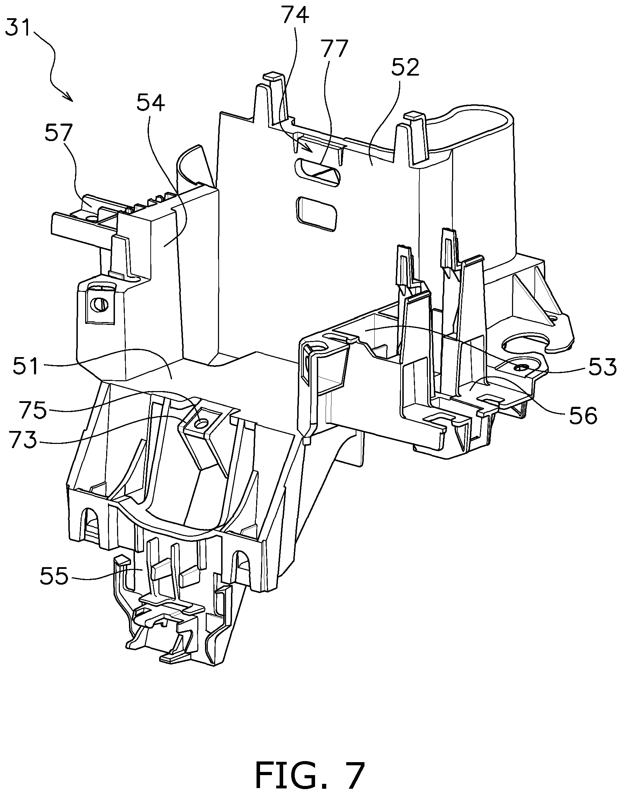

FIG. 6 is a perspective view of the battery holder 31 and the battery 30. FIG. 7 is a perspective view of the battery holder 31. As shown in FIGS. 6 and 7, the battery holder 31 has a shape that opens forward and upward. The battery holder 31 includes a support surface 51, a rear wall 52, a first side wall 53, and a second side wall 54. The support surface 51 has a flat shape. The support surface 51 is arranged below the battery 30. The support surface 51 supports the battery 30 from below. The support surface 51 extends forward beyond the front surface 32 of the battery 30. As shown in FIG. 2, the support surface 51 is inclined forward and upward.

The rear wall 52 extends upward from the support surface 51. The rear wall 52 is arranged behind the battery 30. The rear wall 52 supports the battery 30 from behind. The rear wall 52 extends above the upper surface 34 of battery 30. As shown in FIG. 2, the rear wall 52 is inclined rearward and upward.

The first side wall 53 and the second side wall 54 extend upward from the support surface 51. The first side wall 53 is arranged to the left of the battery 30. The second side wall 54 is arranged to the right of the battery 30. The first side wall 53 and the second side wall 54 are lower than the rear wall 52. That is, the upper end of the first side wall 53 and the upper end of the second side wall 54 are positioned below the upper end of the rear wall 52. The first side wall 53 is lower than the first side surface 36 of the battery 30. The second side wall 54 is lower than the second side surface 37 of the battery 30.

The battery holder 31 includes a connector holding portion 55. The connector holding portion 55 is arranged below the support surface 51. The connector holding portion 55 is connected to the support surface 51. The connector holding portion 55 is formed integrally with the support surface 51. Alternatively, the connector holding portion 55 may be provided separately from the support surface 51. As shown in FIG. 4, the connector holding portion 55 holds the connectors 38 and 39. The connectors 38 and 39 are connected to a harness that is connected to battery 30.

The battery holder 31 includes a first holding portion 56 and a second holding portion 57. The first holding portion 56 and the second holding portion 57 support electrical components (not shown) connected to the battery 30. The first holding portion 56 is arranged outside the first side wall 53 in the left-right direction. The first holding portion 56 is connected to the first side wall 53. The first holding portion 56 is formed integrally with the first side wall 53. Alternatively, the first holding portion 56 may be provided separately from the first side wall 53. The second holding portion 57 is arranged outside the second side wall 54 in the left-right direction. The second holding portion 57 is connected to the second side wall 54. The second holding portion 57 is formed integrally with the second side wall 54. Alternatively, the second holding portion 57 may be provided separately from the second side wall 54.

As shown in FIG. 6, the battery 30 is disposed on the support surface 51. The battery 30 includes a first electrode 58 and a second electrode 59. The first electrode 58 and the second electrode 59 are arranged facing forward of the battery 30. The first electrode 58 and the second electrode 59 are arranged facing upward of the battery 30. The first electrode 58 and the second electrode 59 are arranged apart from each other in the left-right direction.

The first electrode 58 includes a first front hole 61 and a first upper hole 62. The first front hole 61 is provided in a front surface of the first electrode 58. The first front hole 61 faces forward of the battery 30. The first upper hole 62 is provided in an upper surface of the first electrode 58. The first upper hole 62 faces upward of the battery 30. As shown in FIG. 4, a first terminal 66 is connected to the first electrode 58 by a screw 65 passed through the first front hole 61. The first terminal 66 is connected to a harness (not shown). The first terminal 66 may be connected to the first electrode 58 by passing a screw through the first upper hole 62.

The second electrode 59 includes a second front hole 63 and a second upper hole 64. The second front hole 63 is provided in a front surface of the second electrode 59. The second front hole 63 faces forward of the battery 30. The second upper hole 64 is provided in an upper surface of the second electrode 59. The second upper hole 64 faces upward of the battery 30. As shown in FIG. 4, a second terminal 68 is connected to the second electrode 59 by a screw 67 passed through the second front hole 63. The second terminal 68 is connected to a harness (not shown). The second terminal 68 may be connected to the second electrode 59 by passing a screw through the second upper hole 64.

As shown in FIG. 6, the battery 30 is fixed to the battery holder 31 by a fastener 69. The fastener 69 is detachably attached to the battery holder 31 and retains the battery 30 in the battery holder 31. The fastener 69 has a bent plate-like shape. The fastener 69 includes a front plate portion 71 and an upper plate portion 72. The front plate portion 71 is positioned in front of the battery 30. The front plate portion 71 extends in the vertical direction. The front plate portion 71 restricts forward movement of the battery 30. The upper plate portion 72 is positioned above the battery 30. The upper plate portion 72 extends in the front-rear direction. The upper plate portion 72 restricts upward movement of the battery 30.

As shown in FIG. 7, the battery holder 31 includes a first holder attachment portion 73 and a second holder attachment portion 74. The first holder attachment portion 73 is connected to the support surface 51. A lower end of the front plate portion 71 is attached to the first holder attachment portion 73. The first holder attachment portion 73 includes a screw hole 75. As shown in FIG. 6, the lower end of the front plate portion 71 is fixed to the first holder attachment portion 73 with a screw 76. The second holder attachment portion 74 is provided on the rear wall 52. A rear end of the upper plate portion 72 is attached to the second holder attachment portion 74. The second holder attachment portion 74 includes a locking hole 77. The rear end of the upper plate portion 72 is inserted into the locking hole 77 of the second holder attachment portion 74 and locked to the second holder attachment portion 74.

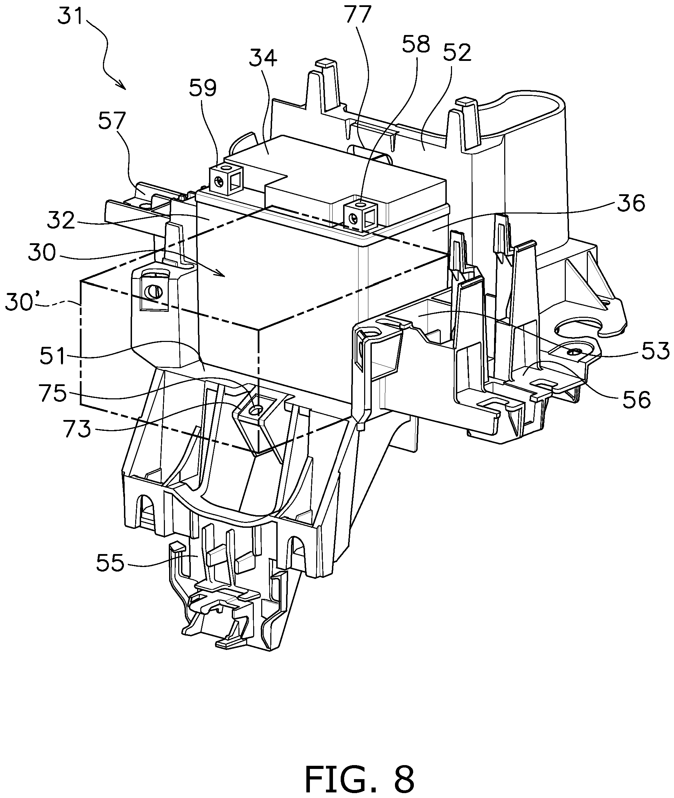

FIG. 8 is a perspective view showing the battery holder 31 and the battery 30 with the fastener 69 removed from the battery holder 31. As described above, the battery holder 31 has a shape that opens forward and upward. Therefore, in a state that the fastener 69 is removed from the battery holder 31, the battery holder 31 supports the battery 30 so as to be movable in the front-rear direction and the vertical direction. Also, the battery holder 31 supports the battery 30 so that the battery 30 is rotatable in the front-rear direction around the lower end of the battery 30. In FIG. 8, the chain double-dashed line indicates the battery 30' rotated forward from the state attached to the battery holder 31.

As shown in FIG. 3, the center cover 41 includes an upper cover portion 27 and a lower cover portion 28. The lower cover portion 28 is arranged below the upper cover portion 27. The lower cover portion 28 is provided separately from the upper cover portion 27. The lower cover portion 28 is detachable from the left side cover 42, the right side cover 43, and the upper cover portion 27. The lower cover portion 28 is attached to the left side cover 42, the right side cover 43, and the upper cover portion 27 by fitting.

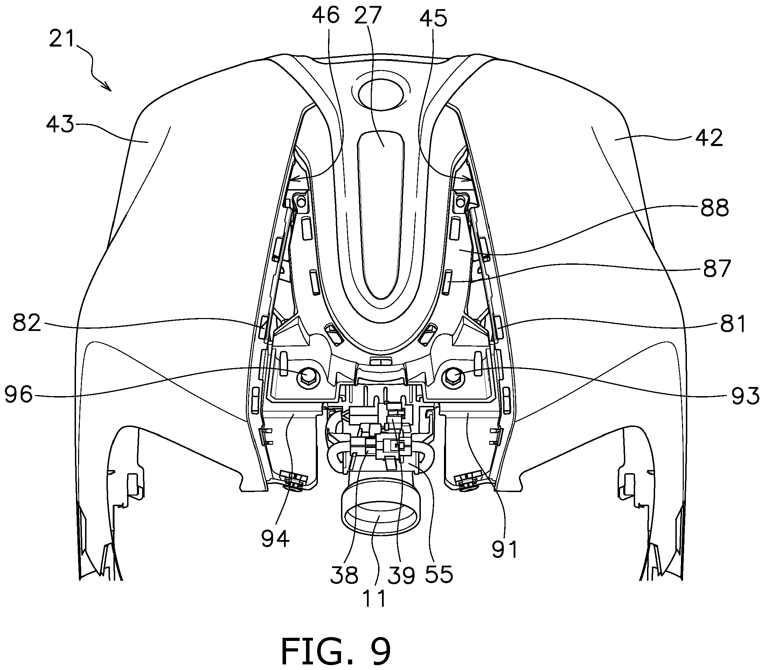

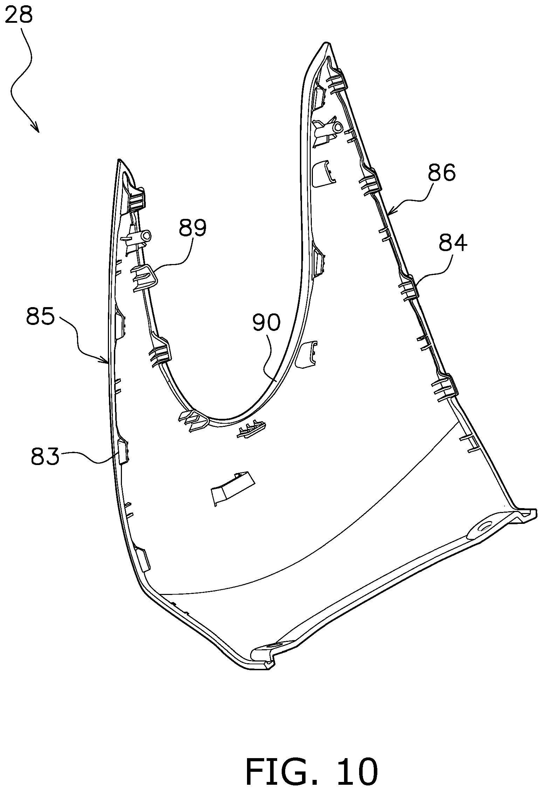

FIG. 9 is an enlarged front view of the straddled vehicle 1 with the lower cover portion 28 removed. FIG. 10 is a perspective view of the lower cover portion 28. As shown in FIG. 9, the left side cover 42 includes a plurality of first locking holes 81. The plurality of first locking holes 81 are arranged along the first inner edge portion 45. The right side cover 43 includes a plurality of second locking holes 82. The plurality of second locking holes 82 are arranged along the second inner edge portion 46. In the drawing, only a part of the plurality of first locking holes 81 are denoted by reference numerals 81, and the reference numerals of other first locking holes 81 are omitted. In the drawing, only a part of the plurality of second locking holes 82 are denoted by reference numerals 82, and the reference numerals of other second locking holes 82 are omitted.

As shown in FIG. 10, the lower cover portion 28 includes a plurality of first locking projections 83 and a plurality of second locking projections 84. The plurality of first locking projections 83 are arranged along the left edge portion 85 of the lower cover portion 28. The plurality of first locking projections 83 are respectively inserted into the plurality of first locking holes 81 and locked to the plurality of first locking holes 81. Thereby, the lower cover portion 28 is attached to the left side cover 42. In the drawings, only a part of the plurality of first locking projections 83 are denoted by reference numeral 83, and the reference numerals of other first locking projections 83 are omitted.

The plurality of second locking projections 84 are arranged along a right edge portion 86 of the lower cover portion 28. The plurality of second locking projections 84 are respectively inserted into the plurality of second locking holes 82 and locked to the plurality of second locking holes 82. Thereby, the lower cover portion 28 is attached to the right side cover 43. In the drawing, only a part of the plurality of second locking projections 84 are denoted by reference numerals 84, and the reference numerals of other second locking projections 84 are omitted.

As shown in FIG. 9, the upper cover portion 27 includes a plurality of third locking holes 87. The plurality of third locking holes 87 are arranged along an edge portion 88 of the lower cover portion 28. In the drawing, only a part of the plurality of third locking holes 87 are denoted by reference numerals 87, and the reference numerals of other third locking holes 87 are omitted.

As shown in FIG. 10, the lower cover portion 28 includes a plurality of third locking projections 89. The lower cover portion 28 includes a recess 90 recessed downward. The upper cover portion 27 is arranged in the recess 90. The plurality of third locking projections 89 are arranged along the recess 90. In the drawing, only a part of the plurality of third locking projections 89 are denoted by reference numerals 89, and the reference numerals of other third locking projections 89 are omitted. The plurality of third locking projections 89 are respectively inserted into the plurality of third locking holes 87 and locked to the plurality of third locking holes 87. Thereby, the lower cover portion 28 is attached to the upper cover portion 27.

As shown in FIG. 4, the left side cover 42 includes a first cover attachment portion 91. The first cover attachment portion 91 protrudes inward in the left-right direction from the first inner edge portion 45. The first cover attachment portion 91 is arranged below the battery 30 as seen in the vehicle front view. The first cover attachment portion 91 includes a first screw hole 92. As shown in FIG. 9, the upper cover portion 27 is fixed to the left side cover 42 by a screw 93 passed through the first screw hole 92.

As shown in FIG. 4, the right side cover 43 includes a second cover attachment portion 94. The second cover attachment portion 94 protrudes inward in the left-right direction from the second inner edge portion 46. The second cover attachment portion 94 is arranged below the battery 30 as seen in the vehicle front view. The second cover attachment portion 94 includes a second screw hole 95. As shown in FIG. 9, the upper cover portion 27 is fixed to the right side cover 43 by a screw 96 passed through the second screw hole 95. The first cover attachment portion 91 and the second cover attachment portion 94 are arranged at a non-overlapping position with the battery 30 as seen in the vehicle front view.

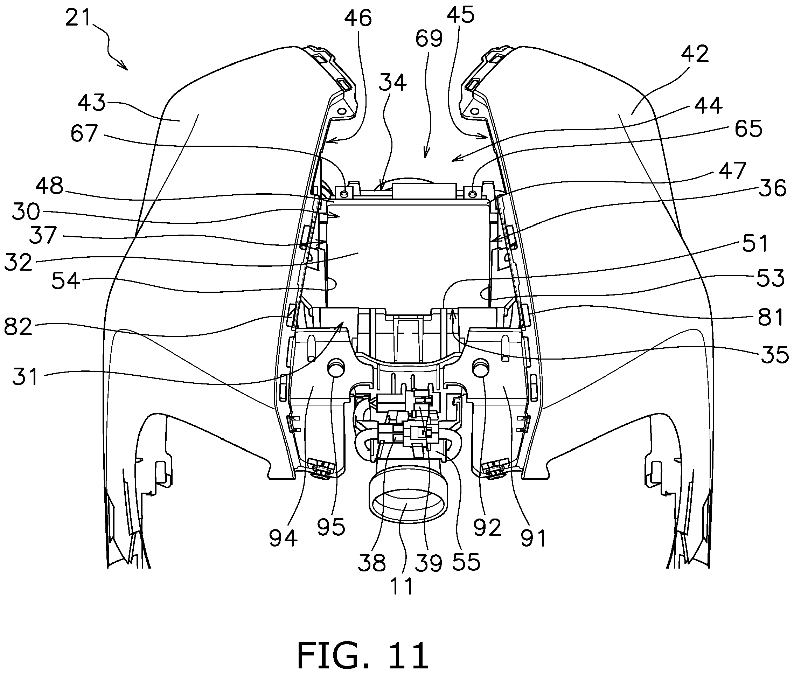

Next, a method for removing the battery 30 will be described. First, the lower cover portion 28 is removed from the left side cover 42, the right side cover 43, and the upper cover portion 27, as shown in FIG. 9. Next, the screws 93 and 96 of the upper cover portion 27 are removed, and the upper cover portion 27 is removed from the left side cover 42 and the right side cover 43 as shown in FIG. 4. Next, the screw 76 of the fastener 69 is removed, and the fastener 69 is removed from the battery holder 31 as shown in FIG. 11. Thereby, the battery 30 becomes movable with respect to the battery holder 31.

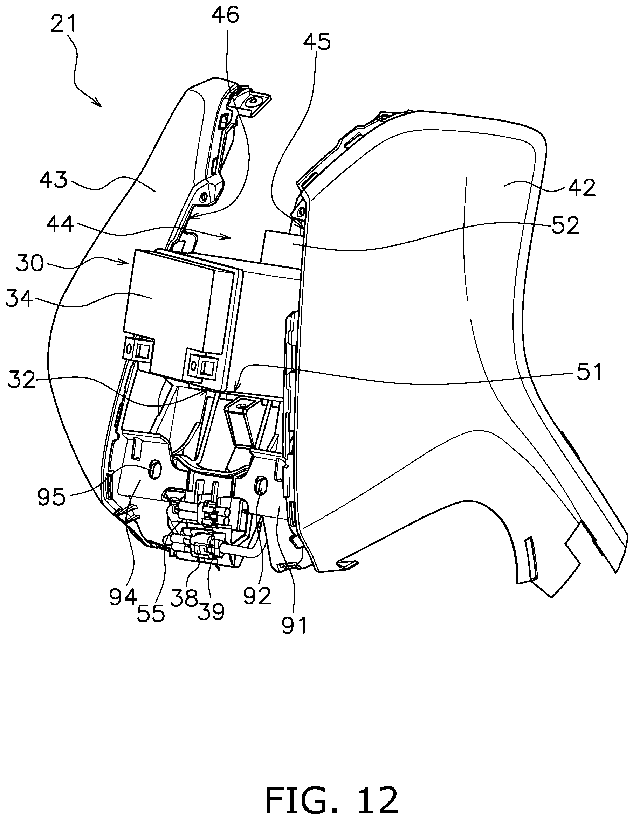

The battery 30 is then rotated about the lower end of battery 30 on the support surface 51. As a result, as shown in FIG. 12, the upper surface 34 of the battery 30 faces forward, and the front surface 32 of the battery 30 contacts the support surface 51 of the battery holder 31. In this state, the battery 30 is arranged to protrude forward from the opening 44. Then, the battery 30 is removed from the straddled vehicle 1 by pulling the battery 30 forward through the opening 44.

In the straddled vehicle 1 according to the present embodiment described above, the opening 44 becomes smaller in the left-right direction toward above. Therefore, when the battery 30 is extracted upward, the battery 30 tends to interfere with the left and right side covers 42 and 43. On the other hand, the opening 44 widens in the left-right direction toward below. Therefore, by rotating the battery 30 around the lower end and lowering the position of the upper portion of the battery 30, the battery 30 can be pulled out through the wide portion of the opening 44. As a result, the battery 30 can be easily removed from the straddled vehicle 1 without interference with the left and right side covers 42 and 43 without enlarging the opening 44. Therefore, in the straddled vehicle 1 according to the present embodiment, it is possible to easily remove the battery 30 while suppressing deterioration of the rigidity of the front cover 21. When attaching the battery 30 to the straddled vehicle 1, the procedure for removing the battery 30 described above may be reversed.

Although one embodiment of the present invention has been described above, the present invention is not limited to the above-described embodiment, and various modifications are possible without departing from the gist of the invention.

The straddled vehicle 1 is not limited to a scooter, and may be another type of vehicle such as a moped. The structure of the front cover 21 is not limited to that of the above embodiment, and may be modified. For example, the upper cover portion 27 and the lower cover portion 28 may be integrated with each other.

The structure of the battery holder 31 is not limited to that of the above embodiment, and may be modified. For example, the connector holding portion 55 may be omitted. The first holding portion 56 and the second holding portion 57 may be omitted. The structure of the fastener 69 is not limited to that of the above embodiment, and may be modified. For example, the front plate portion 71 may extend in the left-right direction. The upper plate portion 72 may extend in the left-right direction.

The shape or arrangement of the battery 30 is not limited to that of the above embodiment, and may be changed. For example, the dimension of the battery 30 in the left-right direction may be smaller than the dimension of the battery 30 in the vertical direction.

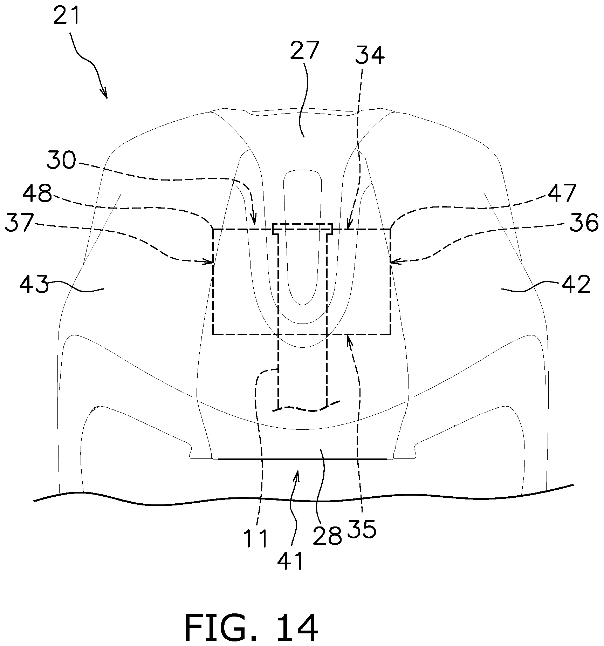

As shown in FIG. 14, the upper left corner portion 47 may overlap the left side cover 42 as seen in the vehicle front view. The upper right corner portion 48 may overlap the right side cover 43 as seen in the vehicle front view. Even in such a case, the battery 30 can be removed by rotating the battery 30 around the lower end without interference with the left and right side covers 42 and 43.

### REFERENCE SIGNS LIST

11: Head pipe, 21: Front cover, 27: Upper cover portion, 28: Lower cover portion, 30: Battery, 31: Battery holder, 51: Support surface, 41: Center cover, 42: Left side cover, 43: Right side cover, 44: Opening, 47: Upper left corner portion, 48: Upper right corner portion, 69: Fastener, 71: Front plate portion, 72: Upper plate portion

## Claims

1. A straddled vehicle (1) comprising:
a head pipe (11);
a front cover (21) arranged in front of the head pipe (11);
a battery holder (31) disposed between the head pipe (11) and the front cover (21);
a battery (30) held in the battery holder (31), wherein
the front cover (21) includes
a center cover (41) that overlaps the battery (30) as seen in a vehicle front view,
a left side cover (42) arranged leftward of the center cover (41), and
a right side cover (43) arranged rightward of the center cover (41),
an opening (44) is provided between the left side cover (42) and the right side cover (43) in a state that the center cover (41) is removed from the front cover (21),
the opening (44) has a shape expanding in a left-right direction of the straddled vehicle (1) toward below as seen in the vehicle front view, wherein the opening (44) has a shape smaller than the battery (30) in the left-right direction above the battery (30);
wherein the battery holder (31) supports the battery (30) so that the battery (30) is rotatable around a lower end of the battery (30), movable forward, and removable through said opening (44);
the battery holder (31) including a support surface (51) that supports the battery (30) from below,
the battery (30) including a front surface (32) facing forward while being held by the battery holder (31), and
the battery (30) being arranged to protrude forward from the opening (44) in a state that the battery (30) is so rotated that the front surface (32) of the battery (30) contacts the support surface (51) of the battery holder (31).

2. The straddled vehicle according to claim 1, wherein
in a state that the battery (30) is held in the battery holder (31), a dimension of the battery (30) in a vertical direction of the straddled vehicle (1) is larger than a dimension of the battery (30) in a front-rear direction of the straddled vehicle (1).

3. The straddled vehicle according to claim 1 or 2, wherein
in a state that the battery (30) is held in the battery holder (31), a dimension of the battery (30) in the left-right direction is larger than the dimension of the battery (30) in the vertical direction.

4. The straddled vehicle according to any one of claims 1 to 3, wherein
a top portion of the battery (30) includes an upper left corner portion (47) and an upper right corner portion (48),
as seen in the vehicle front view, the upper left corner portion (47) overlaps the left side cover (42), and
as seen in the vehicle front view, the upper right corner portion (48) overlaps the right side cover (43).

5. The straddled vehicle according to any one of claims 1 to 4, wherein
the battery holder (31) has a shape that opens forward.

6. The straddled vehicle according to any one of claims 1 to 5, further comprising:
a fastener (69) that is detachably attached to the battery holder (31) and retains the battery (30) in the battery holder (31).

7. The straddled vehicle according to claim 6, wherein
the battery holder (31) has a shape that opens forward and upward, and
the fastener (69) includes
a front plate portion (71) positioned in front of the battery (30), and
an upper plate portion (72) positioned above the battery (30).

8. The straddled vehicle according to any one of claims 1 to 7, wherein
the battery holder (31) includes a support surface (51) that supports the battery (30) from below, and
the support surface (51) is inclined forward and upward.

9. The straddled vehicle according to any one of claims 1 to 8, wherein
the center cover (41) includes
an upper cover portion (27), and
a lower cover portion (28) arranged below the upper cover portion (27) and
provided separately from the upper cover portion (28), and
the lower cover portion (28) is detachable with respect to the left side cover (42), the right side cover (43), and the upper cover portion (27).

10. The straddled vehicle according to claim 9, wherein
the lower cover portion (28) is attached to the left side cover (42), the right side cover (43), and the upper cover portion (27) by fitting.

## Patentansprüche

1. Spreizsitz-Fahrzeug (1), umfassend:
ein Steuerrohr (11);
eine vordere Verkleidung (21), die vor dem Steuerrohr (11) angeordnet ist;
eine Batterie-Halterung (31), die zwischen dem Steuerrohr (11) und der vorderen Verkleidung (21) angeordnet ist;
eine Batterie (30), die von der Batterie-Halterung (31) gehalten wird, wobei die vordere Verkleidung (21) einschließt:
eine mittlere Verkleidung (51), die, in einer Fahrzeug-Vorderansicht gesehen, die Batterie (30) überlappt,
eine linke Seitenverkleidung (42), die links von der mittleren Verkleidung (41) angeordnet ist, und
eine rechte Seitenverkleidung (43), die rechts von der mittleren Verkleidung (41) angeordnet ist,
wobei sich eine Öffnung (44) zwischen der linken Seitenverkleidung (42) und der rechten Seitenverkleidung (43) in einem Zustand befindet, in dem die mittlere Verkleidung (41) von der vorderen Verkleidung (21) abgenommen ist,
die Öffnung (44) eine Form hat, die sich, in der Fahrzeug-Vorderansicht gesehen, in einer Querrichtung des Spreizsitz-Fahrzeugs (1) nach unten hin aufweitet, wobei die Öffnung (44) eine Form hat, die in der Querrichtung oberhalb der Batterie (30) kleiner ist als die Batterie (30);
wobei die Batterie-Halterung (31) die Batterie (30) so trägt, dass die Batterie (30) um ein unteres Ende der Batterie (30) herum gedreht werden kann, nach vorn bewegt werden kann und über die Öffnung (44) entnommen werden kann;
die Batterie-Halterung (31) eine Stützfläche (51) enthält, die die Batterie (30) von unten stützt,
die Batterie (30) eine vordere Fläche (32) enthält, die, wenn sie von der Batterie-Halterung (31) gehalten wird, nach vorn gewandt ist; und
die Batterie (30) so angeordnet ist, dass sie von der Öffnung (44) in einem Zustand nach vorn vorsteht, in dem die Batterie (30) so gedreht ist, dass die vordere Fläche (32) der Batterie (30) mit der Stützfläche (51) der Batterie-Halterung (31) in Kontakt ist.

2. Spreizsitz-Fahrzeug nach Anspruch 1, wobei
in einem Zustand, in dem die Batterie (30) in der Batterie-Halterung (31) gehalten wird, eine Abmessung der Batterie (30) in einer vertikalen Richtung des Spreizsitz-Fahrzeugs (1) größer ist als eine Abmessung der Batterie (30) in einer Längsrichtung des Spreizsitz-Fahrzeugs (1).

3. Spreizsitz-Fahrzeug nach Anspruch 1 oder 2, wobei
in einem Zustand, in dem die Batterie (30) in der Batterie-Halterung (31) gehalten wird, eine Abmessung der Batterie (30) in der Querrichtung größer ist als die Abmessung der Batterie (30) in der vertikalen Richtung.

4. Spreizsitz-Fahrzeug nach einem der Ansprüche 1 bis 3, wobei
ein oberer Abschnitt der Batterie (30) einen oberen linken Eckenabschnitt (47) und einen oberen rechten Eckenabschnitt (48) einschließt,
der obere linke Eckenabschnitt (47), in der Fahrzeug-Vorderansicht gesehen, die linke Seitenverkleidung (42) überlappt, und
der obere rechte Eckenabschnitt (48), in der Fahrzeug-Vorderansicht gesehen, die rechte Seitenverkleidung (43) überlappt.

5. Spreizsitz-Fahrzeug nach einem der Ansprüche 1 bis 4, wobei
die Batterie-Halterung (31) eine Form hat, die sich nach vorn öffnet.

6. Spreizsitz-Fahrzeug nach einem der Ansprüche 1 bis 5, das des Weiteren umfasst:
ein Befestigungselement (69), das lösbar an der Batterie-Haltung (31) angebracht ist und die Batterie (30) in der Batterie-Halterung (31) festhält.

7. Spreizsitz-Fahrzeug nach Anspruch 6, wobei
die Batterie-Halterung (31) eine Form hat, die sich nach vorn und nach oben öffnet, und das Befestigungselement (69) enthält:
einen vorderen Plattenabschnitt (71), der vor der Batterie (30) positioniert ist, sowie einen oberen Plattenabschnitt (72), der oberhalb der Batterie (30) positioniert ist.

8. Spreizsitz-Fahrzeug nach einem der Ansprüche 1 bis 7, wobei
die Batterie-Halterung (31) eine Stützfläche (51) enthält, die die Batterie (30) von unten stützt, und
die Stützfläche (51) nach vorn und nach oben geneigt ist.

9. Spreizsitz-Fahrzeug nach einem der Ansprüche 1 bis 8, wobei
die mittlere Verkleidung (41) enthält:
einen oberen Verkleidungsabschnitt (27), sowie
einen unteren Verkleidungsabschnitt (28), der unterhalb des oberen Verkleidungsabschnitts (27) angeordnet und von dem oberen Verkleidungsabschnitt (28) getrennt ist, und
wobei der untere Verkleidungsabschnitt (28) in Bezug auf die linke Seitenverkleidung (42), die rechte Seitenverkleidung (43) sowie den oberen Verkleidungsabschnitt (27) gelöst werden kann.

10. Spreizsitz-Fahrzeug nach Anspruch 9, wobei
der untere Verkleidungsabschnitt (28) durch Aufpassen an der linken Seitenverkleidung (42), der rechten Seitenverkleidung (43) und dem oberen Verkleidungsabschnitt (27) angebracht wird.

## Revendications

1. Véhicule à enfourcher (1), comprenant :
un tube de tête (11) ;
un carénage avant (21) agencé devant le tube de tête (11) ;
un support de batterie (31) disposé entre le tube de tête (11) et le carénage avant (21) ;
une batterie (30) supportée dans le support de batterie (31), dans lequel
le carénage avant (21) comprend
un carénage central (41) qui chevauche la batterie (30) en vue de face du véhicule,
un carénage latéral gauche (42) agencé à gauche du carénage central (41), et
un carénage latéral droit (43) agencé à droite du carénage central (41),
une ouverture (44) est pourvue entre le carénage latéral gauche (42) et le carénage latéral droit (43) dans un état où le carénage central (41) est retiré du carénage avant (21),
l'ouverture (44) a une forme qui s'élargit en direction gauche-droite du véhicule à enfourcher (1) vers le bas en vue de face du véhicule, dans lequel l'ouverture (44) a une forme plus petite que la batterie (30) dans la direction gauche-droite au-dessus de la batterie (30) ;
dans lequel le support de batterie (31) supporte la batterie (30) de telle sorte que la batterie (30) est rotative autour d'une extrémité inférieure de la batterie (30), mobile vers l'avant, et amovible à travers ladite ouverture (44) ;
le support de batterie (31) comprenant une surface de support (51) qui supporte la batterie (30) par le bas,
la batterie (30) comprenant une surface avant (32) tournée vers l'avant tout en étant supportée par le support de batterie (31), et
la batterie (30) étant agencée pour faire saillie vers l'avant depuis l'ouverture (44) dans un état où la batterie (30) est tournée de telle sorte que la surface avant (32) de la batterie (30) entre en contact avec la surface de support (51) du support de batterie (31).

2. Véhicule à enfourcher selon la revendication 1, dans lequel
dans un état où la batterie (30) est supportée dans le support de batterie (31), une dimension de la batterie (30) en direction verticale du véhicule à enfourcher (1) est supérieure à une dimension de la batterie (30) en direction avant-arrière du véhicule à enfourcher (1).

3. Véhicule à enfourcher selon la revendication 1 ou 2, dans lequel
dans un état où la batterie (30) est supportée dans le support de batterie (31), une dimension de la batterie (30) dans la direction gauche-droite est supérieure à la dimension de la batterie (30) dans la direction verticale.

4. Véhicule à enfourcher selon l'une quelconque des revendications 1 à 3, dans lequel
une portion supérieure de la batterie (30) comprend une portion de coin supérieur gauche (47) et une portion de coin supérieur droit (48),
en vue de face du véhicule, la portion de coin supérieur gauche (47) chevauche le carénage latéral gauche (42), et
en vue de face du véhicule, la portion de coin supérieur droit (48) chevauche le carénage latéral droit (43).

5. Véhicule à enfourcher selon l'une quelconque des revendications 1 à 4, dans lequel
le support de batterie (31) a une forme qui s'ouvre vers l'avant.

6. Véhicule à enfourcher selon l'une quelconque des revendications 1 à 5, comprenant en outre :
une fixation (69) qui est attachée de manière détachable au support de batterie (31) et qui retient la batterie (30) dans le support de batterie (31).

7. Véhicule à enfourcher selon la revendication 6, dans lequel
le support de batterie (31) a une forme qui s'ouvre vers l'avant et vers le haut, et
la fixation (69) comprend
une portion de plaque avant (71) positionnée à l'avant de la batterie (30), et
une portion de plaque supérieure (72) positionnée au-dessus de la batterie (30).

8. Véhicule à enfourcher selon l'une quelconque des revendications 1 à 7, dans lequel
le support de batterie (31) comprend une surface de support (51) qui supporte la batterie (30) par le bas, et
la surface de support (51) est inclinée vers l'avant et vers le haut.

9. Véhicule à enfourcher selon l'une quelconque des revendications 1 à 8, dans lequel
le carénage central (41) comprend
une portion de carénage supérieur (27), et
une portion de carénage inférieur (28) agencée sous la portion de carénage supérieur (27) et pourvue séparément de la portion de carénage supérieur (28), et
la portion de carénage inférieur (28) est détachable par rapport au carénage latéral gauche (42), au carénage latéral droit (43) et à la portion de carénage supérieur (27).

10. Véhicule à enfourcher selon la revendication 9, dans lequel
la portion de carénage inférieur (28) est attachée au carénage latéral gauche (42), au carénage latéral droit (43) et à la portion de carénage supérieur (27) par ajustement.
